# EUROPÄISCHE PATENTSCHRIFT

(11) **EP 4 158 259 B1**
(45) Veröffentlichungstag und Bekanntmachung des Hinweises auf die Patenterteilung: **14.08.2024**
(21) Anmeldenummer: 21730134.0
(22) Anmeldetag: 26.05.2021
(51) Int. Cl.: F24S 25/636, F24S 25/65, F24S 40/80

(54) **MONTAGESYSTEM, MONTAGEANORDNUNG UND SOLARANLAGE**
MOUNTING SYSTEM, MOUNTING ARRANGEMENT AND SOLAR SYSTEM
SYSTÈME DE MONTAGE, DISPOSITION DE MONTAGE ET SYSTÈME SOLAIRE

(30) Priorität: 29.05.2020 DE 102020206810
(43) Veröffentlichungstag der Anmeldung: 05.04.2023
(73) Patentinhaber: K2 Systems GmbH, 71272 Renningen (DE)
(72) Erfinder: WIGGERS, Melanie, 75446 Wiernsheim (DE); KOCH, Bernd, 82395 Obersöchering (DE); DANNING, Matthew G., Oakland, California 94611 (US)
(74) Vertreter: Clarenbach, Carl-Philipp
(86) Internationale Anmeldenummer: PCT/EP2021/064127
(87) Internationale Veröffentlichungsnummer: WO 2021/239856

(56) Entgegenhaltungen:
- EP-A2- 2 348 263
- DE-A1- 102005 058 529
- DE-A1- 102012 007 535
- US-B2- 8 776 454

## Beschreibung

Die Erfindung betrifft ein Montagesystem für plattenförmige Solarmodule, mit zumindest einer auf einem Dach eines Gebäudes anordenbaren, insbesondere auflegbaren und/oder befestigbaren, Basisschiene, mit zumindest einem L-förmigen Solarmodulträger, der einen Halteschenkel und einen zumindest im Wesentlichen senkrecht dazu ausgerichteten Tragschenkel aufweist, wobei der Tragschenkel eine Auflage für zumindest ein Solarmodul aufweist und wobei der Halteschenkel zur zumindest bereichsweisen Auflage auf der Basisschiene ausgebildet ist, mit zumindest einem Halteelement zum Befestigen des Halteschenkels auf der Basisschiene, und mit einem in der Basisschiene verschiebbaren Nutstein, der durch eine Schraubverbindung mit dem Haltelement zum Befestigung des Halteschenkels auf der Basisschiene verbunden oder verbindbar ist.

Weiterhin betrifft die Erfindung eine insbesondere aus dem oben beschriebenen Montagesystem gebildete Montageanordnung für ein oder mehrere Solarmodule, die eine Basisschiene und zumindest einen L-förmigen Solarmodulträger aufweist, der einen Halteschenkel und einen zumindest im Wesentlichen senkrecht dazu ausgerichteten Tragschenkel aufweist, wobei der Tragschenkel eine Auflage aufweist, auf welche das zumindest eine Solarmodul aufliegt, und wobei der Halteschenkel zumindest bereichsweise auf der Basisschiene aufliegt, ein Halteelement, das den Halteschenkel auf der Basisschiene befestigt, und einen in der Basisschiene verschiebbaren Nutstein, der durch eine Schraubverbindung mit dem Haltelement zum Befestigen des Halteschenkels auf der Basisschiene verbunden ist.

Außerdem betrifft die Erfindung eine Solaranlage mit wenigstens einem insbesondere plattenförmigen Solarmodul und mit einer wie obenstehend beschriebenen Montageanordnung, durch welche das wenigstens eine Solarmodul auf einem Dach eines Gebäudes gehalten ist.

Montagesysteme und Montageanordnungen der eingangsgenannten Art sind aus dem Stand der Technik bereits bekannt. Um plattenförmige Solarmodule auf einem Dach eines Gebäudes, wie beispielsweise eines Wohnhauses oder Bürogebäudes, zu befestigen, werden Solarmodulträger genutzt, auf deren Auflagen die Solarmodule beabstandet zu dem Dach auflegbar sind. Zur Fixierung der Solarmodulträger auf dem Dach werden in der Regel Basisschienen eingesetzt, an welchen die Solarmodulträger befestigbar sind. Dabei bietet die Basisschiene den Vorteil, dass die Solarmodulträger entlang der Basisschiene an unterschiedlichen Positionen befestigt werden können, wodurch eine hohe Flexibilität bei der Montage der Solarmodule gewährleistet ist. Bekannte Solarmodulträger sind L-förmig ausgebildet und weisen einen Halteschenkel und einen zumindest im Wesentlichen senkrecht dazu ausgerichteten Tragschenkel auf, wobei der Halteschenkel zur Auflage auf der Basisschiene ausgebildet ist, und wobei der Tragschenkel eine Auflage für das Solarmodul insbesondere an seinem freien Ende aufweist. Der Solarmodulträger wird häufig mithilfe einer Nutsteinverbindung auf der Basisschiene mittels eines Halteelements, das durch eine Schraubverbindung mit einem in der Basisschiene verschiebbaren Nutstein verbunden ist, festgeklemmt. Dadurch ist eine flexible und dennoch sichere Arretierung der Solarmodule auf dem Dach möglich.

Ein gattungsgemäßes Montagesystem ist beispielsweise aus der Offenlegungsschrift EP 2348263 A2 bereits bekannt. Das dort eingesetzt Halteelement ist U-förmig ausgebildet, sodass es einen mittleren Basisabschnitt und zwei seitliche Stützabschnitte, die von dem Basisabschnitt vorstehen, aufweist. Die Stützabschnitte hintergreifen dabei jeweils einen Vorsprung des Halteschenkels eines Solarmodulträgers, um eine formschlüssige Verbindung zwischen dem Solarmodulträger und dem Halteelement herzustellen. Die Stützabschnitte sind dabei jeweils einem der Solarmodulträger zugeordnet.

Aus der Offenlegungsschrift EP 2211391 A1 ist ein weiteres Montagesystem für Solarmodule bekannt, bei welchem ein Halteelement auf Halteschenkeln von L-förmigen Solarmodulträgern aufgesetzt ist, um diese zwischen dem Halteelement und der Basisschiene zu verklemmen.

Der vorliegenden Erfindung liegt die Aufgabe zugrunde, ein verbessertes Montagesystem sowie eine verbesserte Montageanordnung zu schaffen, die eine erhöhte Robustheit bei einfacher Montage und hoher Flexibilität bietet.

Die der Erfindung zugrundeliegende Aufgabe wird durch ein Montagesystem mit den Merkmalen des Anspruchs 1 sowie durch eine Montageanordnung mit den Merkmalen des Anspruchs 21 jeweils gelöst.

Das Montagesystem mit den Merkmalen des Anspruchs 1 hat den Vorteil, dass der Solarmodulträger einerseits besonders sicher auf der Basisschiene haltbar ist, und andererseits dennoch ein temperaturbedingter Längenausgleich ermöglicht ist, der ein Verspannen und Belasten oder Überlasten einer aus dem Montagesystem gebauten Montageanordnung trotz wärmebedingter Längenänderungen verhindert. Erfindungsgemäß wird dies dadurch erreicht, dass das Halteelement in dem Basisabschnitt einen auf den Halteschenkel auflegbaren Randabschnitt und beabstandet zu dem Randabschnitt zumindest einen von der Unterseite des Basisabschnitts vorstehenden Abstandshalter zur Auflage auf der Basisschiene aufweist, der eine durch die Schraubverbindung erzeugbare und auf den Halteschenkel wirkende, also durch das Halteelement auf den Halteschenkel übertragbare, Klemmkraft zumindest reduziert, also insbesondere reduziert oder vollständig aufhebt. Das Halteelement wird somit bei der Montage mit dem Basisabschnitt auf den Halteschenkel des Solarmodulträgers aufgelegt. Durch die Schraubverbindung wird das Halteelement auf der Basisschiene festgeklemmt. Dabei wird im Stand der Technik der Halteschenkel des Solarmodulträgers zwischen dem Halteelement und der Basisschiene verklemmt, sodass das Halteelement indirekt, nämlich unter Zwischenschaltung des Halteschenkels, auf der Basisschiene festgelegt beziehungsweise festgeklemmt ist. Durch den vorteilhaften Abstandshalter, der erfindungsgemäß auf der Unterseite in dem Basisabschnitt des Halteelements und beabstandet zu dem Randabschnitt angeordnet ist und zur Auflage auf dem Halteelement dient, wird erreicht, dass das Halteelement trotz des zwischen Haltelement und Basisschiene liegenden Halteschenkels direkt auf der Basisschiene aufliegt beziehungsweise zur Auflage kommt. Dadurch wird erreicht, dass dann, wenn die Schraubverbindung angezogen wird, eine dadurch resultierende Klemmkraft zunächst direkt zwischen Halteelement und Basisschiene, nämlich durch den Abstandshalter, wirkt. Wird die Schraubverbindung weiter angezogen, so kann optional auch eine Klemmkraft auf den Halteschenkel des Solarmodulträgers ausgeübt werden. In jedem Fall wird jedoch durch den Abstandshalter und die dadurch resultierende direkte mechanische Verbindung von Halteelement und Basisschiene die auf den Halteschenkel wirkende oder ausübbare Klemmkraft reduziert. Je nach Ausbildung des Abstandshalters sowie der Anzugskraft der Schraubverbindung kann die Klemmkraft an dem Halteschenkel auch vollständig aufgehoben werden. Dadurch, dass die Klemmkraft zwischen Halteschenkel und Halteelement reduziert ist, wird die Haftreibung zwischen Halteschenkel und Halteelement einerseits und zwischen Halteschenkel und Basisschiene andererseits reduziert und damit ein leichtes Verschieben des Halteschenkels und des Halteelements zueinander einerseits und des Halteschenkels und der Basisschiene zueinander andererseits ermöglicht, wodurch eine vorteilhafte Kompensation von temperaturbedingten Längenänderungen in vorteilhafter Weise gewährleistet ist. Dadurch, dass das Halteelement formschlüssig mit dem Halteschenkel des Randabschnitts verbunden ist, ist außerdem eine verliersichere Anordnung des Solarmodulträgers an dem Halteelement beziehungsweise an der Basisschiene im montierten Zustand gewährleistet. Die formschlüssige Verbindung begrenzt insbesondere das zulässige Spiel zwischen Halteelement und Halteschenkel auf einen gewünschten beziehungsweise zulässigen Wert. Trotz der reduzierten Klemmkraft ist somit eine sichere Verbindung von Halteelement und Solarmodulträger dauerhaft gewährleistet.

Gemäß einer bevorzugten Weiterbildung der Erfindung weist das Halteelement den Basisabschnitt und zwei von der der Basisschiene zugeordneten Unterseite des Basisabschnitts vorstehende Stützabschnitte auf, wobei die Stützabschnitte zur verdrehsicheren Aufnahme der Basisschiene zwischen sich ausgebildet. Bei der Montage werden die Stützabschnitte seitlich über die Basisschiene verschoben, sodass sie die Basisschiene seitlich umgreifen und das Halteelement dann verdrehsicher auf der Basisschiene gehalten ist. Dadurch wird die Robustheit des Montagesystems weiter erhöht. Hierdurch wird eine Verdrehsicherung zwischen dem Halteelement und der Basisschiene gebildet, die sicherstellt, dass das Haltelement durch ein Verdrehen nicht von dem Halteschenkel entfernt werden kann. Dadurch ist eine besonders robuste Verbindung und Halterung des zumindest einen Solarmodulträgers auf der Basisschiene gewährleistet. Vorzugsweise erstrecken sich die Stützabschnitte über die gesamte Länge des Basisabschnitts, sodass sie auch den Halteschenkel seitlich umgreifen, wodurch auch der Solarmodulträger verdrehgesichert auf der Basisschiene durch das Halteelement gehalten oder haltbar ist.

Gemäß einer bevorzugten Ausführungsform der Erfindung weist der Halteschenkel an seinem freien Ende auf der dem Tragschenkel zugewandten Oberseite eine Vertiefung für die formschlüssige Verbindung mit dem Halteelement auf. Die Vertiefung begrenzt dabei vorzugsweise das zuvor genannte Spiel zwischen Halteschenkel und Halteelement. Insbesondere erlaubt die formschlüssige Verbindung ein Spiel in Längserstreckung und/oder in Quererstreckung der Basisschiene beziehungsweise des Halteelements. In der Höhenrichtung (senkrecht zur Quererstreckung und Längserstreckung der Basisschiene) wirkt das Halteelement zumindest formschlüssig mit dem Halteschenkel zusammen, optional spielfrei, insbesondere so dass eine Klemmkraft durch die Schraubverbindung auch auf den Halteschenkel wirkt. Die Vertiefung wird optional durch zwei Vorsprünge auf der Oberseite des Halteschenkels gebildet, die beabstandet zueinander angeordnet sind, sodass zwischen ihnen die Vertiefung entsteht. Alternativ ist die Vertiefung direkt in dem Halteschenkel ausgebildet.

Gemäß einer bevorzugten Weiterbildung der Erfindung ist an dem Halteelement eine Halteklammer zur Lagerung an dem Halteschenkel befestigt. Gemäß dieser Ausführungsform ist das Halteelement somit nicht direkt mit dem Halteschenkel des Solarmodulträgers verbunden, sondern unter Zwischenschaltung der Halteklammer. Die Zwischenschaltung der Halteklammer hat den Vorteil, dass einerseits ein vorteilhafter Längenausgleich und andererseits eine einfache Montage von Halteelement und Halteschenkel auf der Basisschiene ermöglicht ist. Darüber hinaus hat die Halteklammer Vorteile, wenn eine elektrische Verbindung beziehungsweise ein Potentialausgleich erreicht werden soll. Vorzugsweise sind der Solarmodulträger und das Halteelement aus Aluminium gefertigt. Bildet sich auf diesen eine Oxidschicht aus, so durchdringt die Halteklammer vorteilhafterweise diese Oxidschicht und gewährleistet dadurch eine verbesserte elektrische Leitfähigkeit zwischen Halteelement und Solarmodulträger beziehungsweise Halteschenkel. Hierzu ist die Halteklammer vorzugsweise aus einem elektrisch leitfähigen Material gefertigt, das härter und weniger korrosionsanfällig ist als das Aluminium von Halteelement und/oder Halteschenkel. Besonders bevorzugt weist die Halteklammer eine Härte auf, die auch elektrisch nicht-leitende Korrosionsschutzschichten, wie beispielsweise Eloxal, Lackierung oder Pulverbeschichtung, beim Aufschieben auf das Halteelement und/oder den Halteschenkel durchdringt, insbesondere zerkratzt, um dadurch den elektrisch leitenden Kontakt zu Halteelement und Halteschenkel herzustellen. Weil wie bei allen anderen metallischen Konstruktionen an Gebäuden auch Solaranlagen in den Potentialausgleich beziehungsweise die Erdung des Gebäudes miteinbezogen werden, bietet die vorteilhafte Ausbildung des Montagesystems bzw. der beschriebenen Montageanordnung den Vorteil einer verbesserten elektrischen Verbindung und damit einer verbesserten Erdung einer, das Montagesystem aufweisenden Solaranlage.

Vorzugsweise ist die Halteklammer im Längsschnitt zumindest im Wesentlichen U-förmig gebogen und auf den Randabschnitt des Basisabschnitts des Halteelements zur Befestigung an dem Halteelement aufgeschoben. Die Halteklammer umklammert somit den Basisabschnitt des Halteelements und ist nach ihrer Montage an dem Halteelement mit dem Halteelement mitführbar. Insbesondere ist die Halteklammer unter elastischer Verformung auf das Halteelement aufgeschoben, sodass die Halteklammer zumindest durch eine reibschlüssige Verbindung, die sich aus der Eigenelastizität der Halteklammer ergibt, an dem Halteelement befestigt ist.

Gemäß einer bevorzugten Weiterbildung der Erfindung weist die Halteklammer einen Unterschenkel und einen Oberschenkel auf, zwischen denen der Randabschnitt des Halteelements aufnehmbar oder aufgenommen ist. Der Unterschenkel ist dabei dazu ausgebildet, in der Vertiefung des Halteschenkels verschiebbar zu lagern. Dazu ist der Unterschenkel beispielsweise derart geformt, dass er innerhalb der Vertiefung auf dem Boden der Vertiefung aufliegend verschiebbar gelagert oder lagerbar ist, wobei die Verschiebbarkeit durch die Seitenwände der Vertiefung beziehungsweise die bereits genannten Vorsprünge begrenzt ist, um das Bewegungsspiel wie zuvor beschrieben zu begrenzen.

Besonders bevorzugt weist der Unterschenkel einen Lagerabschnitt mit einer herausgebogenen Haltelasche auf, die sich in der Vertiefung erstreckt. Die Haltelasche ist somit der in der Vertiefung einliegende Teil des Unterschenkels, der die Beweglichkeit der Halteklammer in der Vertiefung begrenzt. Durch die herausgebogenen Haltelasche ist die Halteklammer insgesamt kostengünstig, beispielsweise als Stanz-Biege-Teil ausbildbar. Insbesondere ist die Haltelasche derart herausgebogen, dass sich ihr Abstand zu dem Unterschenkel beziehungsweise dem Lagerabschnitt in Richtung des freien Endes des Unterschenkels hin vergrößert. Dadurch ist die Halteklammer bei der Montage einfach auf den Halteschenkel aufschiebbar, unter elastischer Verformung der Haltelasche, die dann aufgrund ihrer Eigenelastizität in die Vertiefung eindringt und ein Zurückziehen formschlüssig verhindert.

Der Lagerabschnitt ist vorzugsweise dazu ausgebildet, sich über die Vertiefungen hinweg zu erstrecken und auf dem Halteschenkel aufzuliegen. Damit liegt die Klammer bereichsweise auf dem Halteschenkel auf und lediglich die Haltelasche ragt in die Vertiefung hinein. Es ergibt sich dadurch eine vorteilhafte Trennung von Funktionen.

Vorzugsweise weist der Halteschenkel beabstandet zu seinem freien Ende einen die Vertiefung begrenzenden ersten Vorsprung auf, der einen Axialanschlag für den Randabschnitt des Halteelements bildet. Während beispielsweise die Haltelasche in die eine Bewegungsrichtung formschlüssig mit dem Halteschenkel zusammenwirkt, wirkt nunmehr der erste Vorsprung formschlüssig mit dem Halteelement in die andere Richtung zusammen, sodass bei montierter Halteklammer und auf den Halteschenkel aufgeschobenen Zustand des Halteelements, das Halteelement durch Haltelasche und ersten Vorsprung an dem Halteschenkel in Längserstreckung der Basisschiene festgelegt beziehungsweise gefangen ist.

Weiterhin ist bevorzugt vorgesehen, dass der Halteschenkel an seinem freien Ende einen die Vertiefung begrenzenden zweiten Vorsprung aufweist, der weniger weit vorsteht, in Richtung von der Basisschiene abgewandten Oberseite des Halteschenkels als der erste Vorsprung. Beide Vorsprünge bilden jeweils eine Seitenwand der Vertiefung, die wie zuvor bereits beschrieben, spielbegrenzend wirken. Der zweite Vorsprung wird bei der Montage durch das elastische Zurückfedern der Haltelasche einfach überwunden, wenn der Halteschenkel zwischen das auf der Basisschiene bereits vormontierte Halteelement und die Basisschiene eingeschoben wird. Dadurch sind eine einfache Montage und Halterung gewährleistet.

Vorzugsweise weist der zweite Vorsprung eine an dem freien Ende des Halteschenkels ausgebildete Auflaufschräge, insbesondere spitzwinklig, für die Profilschiene auf. Damit läuft der Halteschenkel beim freien Ende in der Auflaufschräge aus, sodass ein einfaches Einschieben zwischen Halteelement und Basisschiene gewährleistet ist.

Gemäß einer bevorzugten Weiterbildung der Erfindung weist das Halteelement in dem Randabschnitt eine weitere Vertiefung auf, wobei die Halteklammer in dem Oberschenkel einen Rastabschnitt zum Verrasten der Halteklammer in der weiteren Vertiefung des Halteelements aufweist. Durch den Rastabschnitt wird das Halteelement insbesondere formschlüssig und verliersicher an dem Halteelement arretiert. Damit ist das Halteelement nicht mehr allein durch die Elastizität, sondern auch formschlüssig an dem Halteelement verliersicher gehalten. Dies vereinfacht die Montage und die Verwendung des Montagesystems insgesamt.

Besonders bevorzugt weist der Rastabschnitt eine herausgebogene Rastzunge auf, die in Richtung des Unterschenkels vorsteht, um in die weitere Vertiefung beim Aufschieben auf das Halteelement einzugreifen. Dadurch sind eine einfache Montage und eine sichere Arretierung gewährleistet. Unter elastischer Verformung der Rastzunge wird die Halteklammer auf den Randabschnitt aufgeschoben bis die Rastzunge in die Vertiefung gelangt und dadurch die Halteklammer an dem Halteelement arretiert.

Dabei ist vorzugsweise die Rastzunge an ihrem in Aufschieberichtung vorne liegenden Ende mit dem Oberschenkel einstückig verbunden und mit dem von dem vorne liegenden Ende abgewandten hinteren Ende in Richtung des Unterschenkels herausgebogen. Dadurch ist ein einfaches Aufschieben unter elastischer Verformung der Rastzunge auf das Halteelement gewährleistet, während ein Zurückziehen durch die in der weiteren Vertiefung einliegenden Rastzunge formschlüssig verhindert ist.

Gemäß einer alternativen Ausführungsform werden Halteelement und Solarmodulträger ohne Zwischenschaltung einer beziehungsweise der oben beschriebenen Halteklammer miteinander verbunden. Dazu weist das Halteelement in dem Randabschnitt eine Öffnung oder eine wannenförmige Vertiefung auf und der zweite Vorsprung des Halteschenkels ist dazu ausgebildet, in die Öffnung oder Vertiefung zur Arretierung des Halteschenkels an dem Halteelement einzugreifen. Damit sind Halteelement und Halteschenkel direkt mechanisch miteinander formschlüssig verbunden. Beim Auflegen des Halteelements auf den Halteschenkel wird somit der zweite Vorsprung in die Öffnung des Halteelements eingeführt. Alternativ wird bei der Montage der Halteschenkel unter das bereits vormontierte Halteelement eingeschoben, wodurch das Halteelement durch den zweiten Vorsprung angehoben wird, bis der zweite Vorsprung in die Öffnung gelangt und das Halteelement auf den Halteschenkel fällt.

Vorzugsweise ist der zweite Vorsprung zur spielbehafteten Verbindung von Halteelement und Halteschenkel in Längserstreckung des Halteelements kürzer ausgebildet als die Öffnung in Längserstreckung des Halteelements. Dadurch ist ein Toleranzspiel in Längserstreckung der Basisschiene zwischen Halteschenkel und Halteelement gewährleistet.

Besonders bevorzugt ist der zweite Vorsprung zur spielbehafteten Verbindung zwischen Halteelement und Halteschenkel in Quererstreckung des Haltelements schmaler ausgebildet als die Öffnung in Quererstreckung des Halteelements. Hierdurch ergibt sich ein vorteilhaft möglicher Toleranzausgleich beziehungsweise Temperaturkompensationsausgleich in Quererstreckung der Basisschiene.

Weiterhin ist bevorzugt vorgesehen, dass der Abstandshalter des Halteelements stegförmig oder wannenförmig ausgebildet ist und sich quer über das Halteelement erstreckt, um auf beiden Längsseiten der Basisschiene aufzuliegen, oder dass an der Unterseite des Basisabschnitts zwei, insbesondere sich stegförmig und längserstreckende Abstandshalter ausgebildet sind, um auf jeweils einer der Längsseiten der Basisschiene aufzuliegen. In beiden Fällen ist gewährleistet, dass das Halteelement sicher auf der Basisschiene aufliegt und beispielsweise nicht verkippt. Dadurch ist gewährleistet, dass gewünschte Kräfte, die zwischen Halteelement und Basisschiene einerseits und zwischen Halteelement und Halteschenkel andererseits wirken, gezielt eingestellt werden können. Insbesondere ist dadurch sicher gewährbar, dass bei Bedarf der Halteschenkel zwischen dem Halteelement und der Basisschiene nicht verspannt wird, um eine möglichst geringe Reibung zwischen Halteelement und Halteschenkel für einen vorteilhaften Spielausgleich temperaturbedingter Längenänderungen zu ermöglichen. Optional ist der Abstandshalter wannenförmig ausgebildet, sodass er sich sowohl längs als auch quer erstreckt, um auf beiden Längsseiten der Basisschiene insbesondere unter Ausbildung von jeweils einem zumindest linienförmigen Berührungskontakt aufzuliegen. Besonders bevorzugt ist der jeweilige Abstandshalter als eine wannenförmige Vertiefung in dem Halteelement, beispielsweise in der Art einer Sicke, ausgebildet. Dadurch ist eine einfache und kostengünstige Herstellung des Halteelements sowie eine sichere Abstandshaltung gewährleistet.

Besonders bevorzugt weist der Tragschenkel an seinem freien Ende eine Nutprofilschiene zur Aufnahme eines weiteren Nutsteins auf, wobei das Montagesystem wenigstens einen in die Nutprofilschiene einschiebbaren weiteren Nutstein sowie zumindest einen Solarmodulniederhalter aufweist, wobei Nutstein und Solarmodulniederhalter durch eine Schraubverbindung zur Befestigung eines Solarmoduls auf der Auflage des Tragschenkels miteinander verbindbar oder verbunden sind.

Weiterhin ist bevorzugt vorgesehen, dass das Halteelement in Längserstreckung zur Befestigung von zwei Solarmodulträgern gespiegelt ausgebildet ist. Dadurch können in Längserstreckung des Halteelements zwei Solarmodulträger durch das Halteelement auf der Basisschiene befestigt werden. Dadurch ist eine kompakte Anordnung einer Vielzahl von Solarmodulen auf dem Dach des Gebäudes mit Hilfe nur weniger Basisschienen möglich. Durch die vorteilhafte Ausbildung der Solarmodulträger des Halteelements, wie zuvor beschrieben, ist zwischen beiden Solarmodulträgern und dem Halteelement ein temperaturbedingter Längenausgleich in vorteilhafter Art und Weise möglich.

Die erfindungsgemäße Montageanordnung mit den Merkmalen des Anspruchs 21 zeichnet sich dadurch aus, dass das Halteelement in dem Basisabschnitt einen auf den Halteschenkel aufgelegten und formschlüssig mit dem Halteschenkel verbundenen Randabschnitt und beabstandet zu dem Randabschnitt zumindest einen von der Unterseite vorstehenden Abstandshalter aufweist, der auf der Basisschiene aufliegt und eine durch die Schraubverbindung auf den Halteschenkel wirkende Klemmkraft reduziert. Es ergeben sich dadurch die bereits genannten Vorteile. Optional ist der Abstandshalter derart ausgebildet und angeordnet, dass die auf den Halteschenkel wirkende Klemmkraft vollständig aufgehoben ist. Optional wirkt die Schraubverbindung zwischen dem Abstandshalter und dem Randabschnitt, sodass auch eine Klemmkraft auf den Halteschenkel ausgeübt werden kann, wenn die Schraubverbindung ausreichend stark angezogen wird.

Weiterhin ist bevorzugt vorgesehen, dass auf einen Randabschnitt des Halteelements eine Halteklammer zur Arretierung des Solarmodulträgers an dem Halteelement aufgeschoben ist. Die Halteklammer ist bevorzugt wie vorstehend beschrieben ausgebildet und angeordnet um die genannte Arretierung zu erreichen.

Weiterhin ist bevorzugt vorgesehen, dass der Halteschenkel des Solarmodulträgers einen Vorsprung aufweist, der in der Öffnung im Randabschnitt des Halteelements spielbehaftet eingreift. Dieser Vorsprung ist zweckmäßigerweise wie der zuvor beschriebene zweite Vorsprung des Halteschenkels ausgebildet und angeordnet.

Besonders bevorzugt sind auf der Basisschiene zwei Solarmodulträger in Längserstreckung der Basisschiene beabstandet zueinander angeordnet und das Halteelement liegt auf den Halteschenkeln beider Solarmodulträger auf. Die Verbindung zwischen Halteelement und Solarmodulträger ist dabei wie vorstehend beschrieben für den einen Solarmodulträger an dem Halteelement ausgebildet.

Die erfindungsgemäße Solaranlage mit den Merkmalen des Anspruchs 25 zeichnet sich durch die erfindungsgemäße Ausbildung der Montageanordnung aus. Es ergeben sich hierdurch die zuvor bereits genannten Vorteile.

Weitere Vorteile und bevorzugte Merkmale und Merkmalskombinationen ergeben sich insbesondere aus dem zuvor Beschriebenen sowie aus den Ansprüchen. Im Folgenden wird die Erfindung anhand der Zeichnungen näher erläutert. Dazu zeigen
- Figur 1: ein erstes Ausführungsbeispiel einer vorteilhaften Montageanordnung in einer perspektivischen Darstellung,
- Figur 2: eine Detail-Draufsicht auf die Montageanordnung aus Figur 1,
- Figur 3: eine Querschnittdarstellung der Montageanordnung aus Figur 1,
- Figur 4: eine Längsschnittdarstellung der Montageanordnung aus Figur 1,
- Figur 5: ein zweites Ausführungsbeispiel der Montageanordnung in einer perspektivischen Darstellung,
- Figur 6: eine Längsschnittdarstellung der Montageanordnung aus Figur 5,
- Figur 7: ein drittes Ausführungsbeispiel einer vorteilhaften Montageanordnung in einer perspektivischen Darstellung,
- Figur 8: eine Detail-Draufsicht auf die Montageanordnung aus Figur 7,
- Figur 9: eine Längsschnittdarstellung der Montageanordnung aus Figur 7 und
- Figur 10: eine vergrößerte Längsschnittdarstellung der Montageanordnung aus Figur 7.

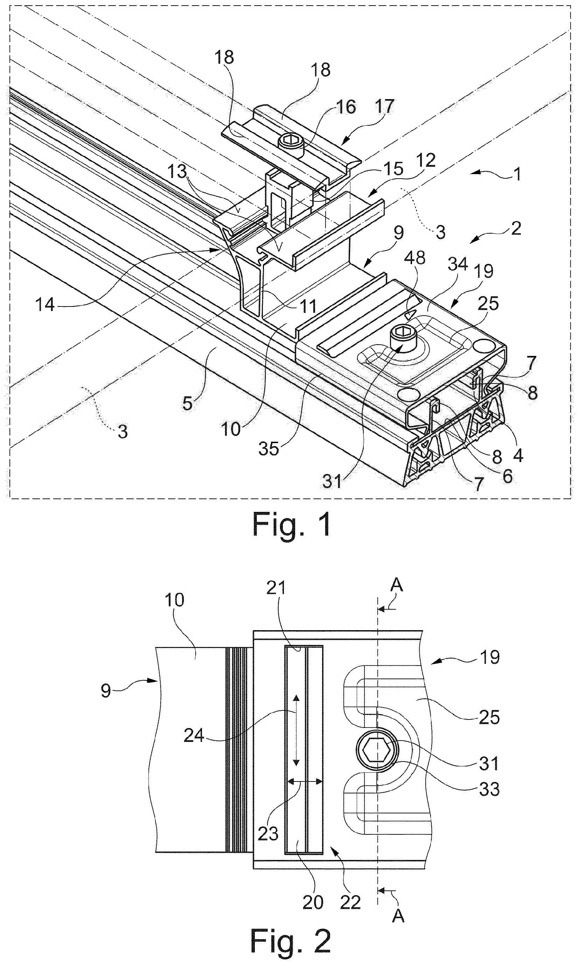

**Figur 1** zeigt in einer perspektivischen Darstellung ein erstes Ausführungsbeispiel einer vorteilhaften Solaranlage mit einer Montageanordnung 1, die aus einem vorteilhaften Montagesystem 2 für Solarmodule gebildet ist. Die Montageanordnung 1 dient zur Montage von plattenförmigen Solarmodulen 3, die in **Figur 2** lediglich beispielhaft durch gestrichelte Linien angedeutet sind, auf einem hier nicht dargestellten Dach eines Gebäudes. Selbstverständlich kann die Montageanordnung auch auf anderen Untergründen montiert werden.

Gemäß dem vorliegenden ersten Ausführungsbeispiel weist die Montageanordnung 1 eine Basisschiene 4 auf, die direkt auf dem Dach oder unter Zwischenschaltung eines Dämpfungselements 5 auf dem Dach montierbar ist. Die Basisschiene 4 ist im Wesentlichen U-förmig ausgebildet, mit einer Grundplatte 6 und mit zwei parallel und beabstandet zueinander von der Grundplatte 6 vorstehenden Längsseiten 7. Die Längsseiten 7 weisen an ihrem von der Grundplatte 6 abgewandten Ende jeweils einen seitlich vorstehenden Vorsprung oder Rückhaltesteg 8 auf, wobei die Rückhaltestege 8 auf den einander zugewandten Innenseiten der Längsseiten 7 angeordnet sind.

Auf der Basisschiene 4 ist ein L-förmiger Solarmodulträger 9 angeordnet, der einen auf der Oberseite der Basisschiene 4 und damit auf den freien Enden der Längsseiten 7 aufliegenden Halteschenkel 10 und einen im Wesentlichen senkrecht zu dem Halteschenkel 10 ausgerichteten Tragschenkel 11 aufweist. Der Tragschenkel 11 weist auf seinem freien, also von dem Halteschenkel 10 abweisenden Ende 12 eine Auflage 13 auf, auf welcher die zuvor genannten Solarmodule 3 auflegbar sind. Die Auflage 13 ist insbesondere parallel zur Basisschiene 4 ausgerichtet und wird vorliegend durch eine Nutprofilschiene 14 gebildet, in welcher ein Nutstein 15 verschiebbar gelagert ist. Dabei ist die Nutprofilschiene 14 quer zur Basisschiene 4 ausgerichtet, sodass der Nutstein 15 quer zur Längserstreckung der Basisschiene 4 verschiebbar ist. Der Nutstein 15 ist dabei in seitlichen Aussparungen der Nutprofilschiene 14 geführt und verdreh- und verliersicher gehalten. Der Nutstein 15 weist insbesondere ein Gewinde auf, in welches eine Befestigungsschraube 16 eingeschraubt ist, deren Schraubenkopf auf einem Solarmodulniederhalter 17, durch welchen sich die Befestigungsschraube 16 hindurch erstreckt, aufliegt. Der Solarmodulniederhalter 17 weist zwei parallel zueinander ausgerichtete und voneinander abgewandte Niederhalterabschnitte 18 auf, die jeweils eines der Solarmodule 3 auf der von der Auflage 13 abgewandten Oberseite mit der durch die Befestigungsschraube 16 erwirkbaren Klemmkraft beaufschlagen, um dadurch die Solarmodule 3 auf dem Solarmodulträger 9 zu befestigen. Alternativ kann selbstverständlich auch nur ein einzelnes Solarmodul 3 mit einem dafür geeigneten Solarmodulniederhalter 17 auf der Auflage 13 befestigt sein.

Das von dem Tragschenkel 11 abgewandte freie Ende des Halteschenkels 10 liegt zwischen der Basisschiene 4 und einem auf der Basisschiene 4 angeordneten Halteelement 19. Durch das Halteelement 19 ist der Solarmodulträger 9 auf der Basisschiene 4 formschlüssig arretiert, wobei die Verbindung zwischen Halteelement 19 und Solarmodulträger 9 ein Spiel in Längs- und/oder Querrichtung mit Bezug auf die Basisschiene 4 zulässt, sodass bei Auftreten von temperaturbedingten Längenänderungen in der Montageanordnung 1 die Längenänderungen durch das vorhandene Spiel aufgenommen beziehungsweise ausgeglichen werden können, ohne dass mechanische Spannungen in der Montageanordnung 1 entstehen, die zu einer Belastung oder Überlastung von Teilen der Montageanordnung 1 führen können.

**Figur 2** zeigt dazu in einer Detail-Draufsicht den Verbindungsbereich von Solarmodulträger 9 und Halteelement 19. Der Halteschenkel 10 weist an seinem freien Ende einen Vorsprung 20 auf, der in eine Öffnung 21 in einem stirnseitigen Randabschnitt 22 des Halteelements 19 eingreift. Die Außenkontur des Vorsprungs 20 entspricht dabei vorzugsweise zumindest im Wesentlichen der Innenkontur der Öffnung 21, wobei der Vorsprung 20 in Längserstreckung der Basisschiene 4 gesehen kürzer ausgebildet ist als die Öffnung 21 und in Quererstreckung schmaler, sodass der Vorsprung 20 in Längs- und Quererstreckung, wie durch Doppelpfeile 23 und 24 in Figur 2 gezeigt, relativ zu dem Halteelement 19 in der Öffnung 21 verschiebbar ist.

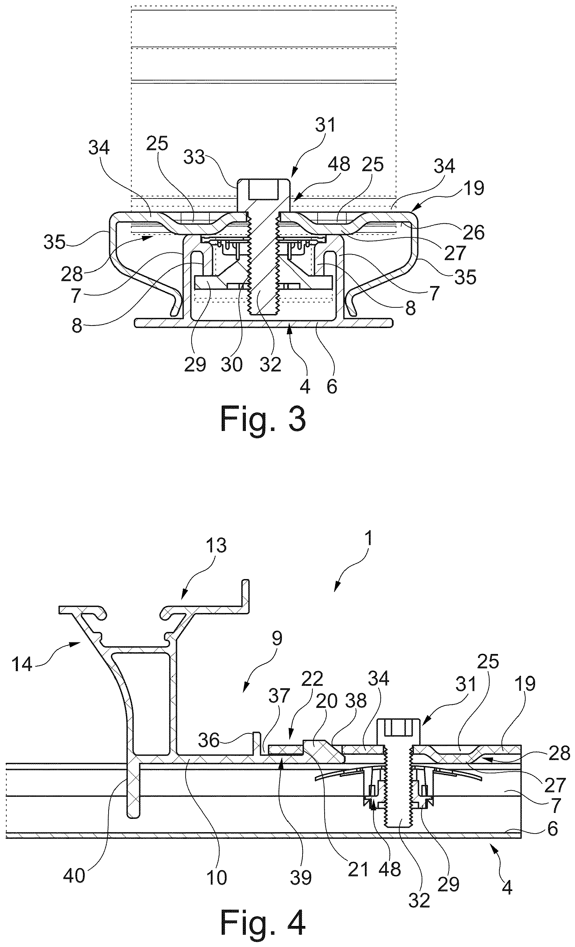

**Figur 3** zeigt eine Querschnittsdarstellung der Montageanordnung 1 aus **Figur 1** entlang der in **Figur 2** gezeigten Linie A-A. Wie in **Figur 2** bereits gezeigt, weist die Halteplatte 19 eine wannen- oder sickenförmige Vertiefung 25 auf, die sich auf der Unterseite 26 des Halteelements 19 als ein von der Unterseite 26 in Richtung der Basisschiene 4 vorstehender Vorsprung 27 ausbildet. Der Vorsprung 27 bildet einen Abstandshalter 28, der dazu dient, bei korrekt montiertem Halteelement 19 auf der freien Oberseite der Längsseiten 7 der Basisschiene 4 aufzuliegen. Zu der Vertiefung 25 benachbarte Bereiche des Halteelements 19 liegen somit oberhalb der Basisschiene 4 beabstandet zu dieser.

Wie in **Figur 3** weiterhin gezeigt ist, ist in der Basisschiene 4 ein Nutstein 29 verdrehsicher und in Längsrichtung der Basisschiene 4 verschiebbar gehalten. Der Nutstein 29 ist breiter ausgebildet als die lichte Weite zischen den Rückhaltestegen 8, sodass der Nutstein 29 verliersicher in der Basisschiene 4 verschiebbar gehalten ist. Der Nutstein 29 weist eine Öffnung mit einem Innengewinde 30 auf, in welches eine Befestigungsschraube 31 mit ihrem ein Außengewinde aufweisenden Schraubenschaft 32 zur Ausbildung einer Schraubverbindung 48 mit dem Halteelement 19 eingeschraubt ist. Ein Schraubenkopf 33 der Befestigungsschraube 31 liegt auf der von der Unterseite 26 abgewandten Oberseite 34 des Halteelements 19 auf. Die Vertiefung 25 ist dabei derart ausgebildet, dass sie den Bereich der Schraubenkopfauflage des Schraubenkopfs 33 umgibt, sodass die Schraubenkopfauflage selbst nicht in der Vertiefung liegt, wie auch in Figuren 1 und 2 gezeigt. Durch das Anziehen der Befestigungsschraube 31 werden Halteelement 19 und Nutstein 29 aufeinander zu bewegt, wodurch die Basisschiene 4 im Bereich der Vorsprünge 8 zwischen diesen beiden verklemmt wird. Dadurch wird eine Haltekraft auf das Halteelement 19 ausgeübt, durch welche das Halteelement 19 auf die Oberseite der Längsseiten 7 gepresst beziehungsweise geklemmt wird, sodass es durch Haftreibung beziehungsweise durch Reibschluss an einem Längsverschieben an der Basisschiene 4 gehindert ist. Durch das Anziehen der Befestigungsschraube 31 ist somit das Halteelement 19 mit dem Abstandshalter 28 auf der Basisschiene 4 festlegbar beziehungsweise festgelegt.

Wie in **Figur 3** weiterhin ersichtlich ist, weist das Halteelement 19 einen C-förmigen Querschnitt auf, sodass das Halteelement 19 einen mittleren Basisabschnitt 34 aufweist, in welchem die Öffnung zur Durchführung des Schraubenschafts 32 sowie der Abstandshalter 28 ausgebildet ist, sowie zwei jeweils von dem Basisabschnitt 34 von der Unterseite 26 vorstehende Stützelemente oder Stützabschnitte 35 auf, die derart ausgebildet sind, dass sie zwischen sich die Basisschiene 4 aufnehmen. Wie in Figur 1 gezeigt, erstrecken sich die Stützabschnitte 35 in gesamter Länge des Basisabschnitts 34, sodass das Halteelement 19 durch die Stützabschnitte 35 verdrehgesichert auf der Basisschiene 4 gehalten ist. Hierdurch ergibt sich eine hohe Robustheit der Montageanordnung 1 gegen äußere Einflüsse. Durch die C-Form des Querschnitts des Halteelements 19 ergibt sich außerdem, dass die Stützabschnitte 35 an ihren freien Enden nahe an der Außenseite der Längsseite 7 anliegen oder herangeführt sind, um keine oder nur geringfügige Schiefstellungen des Halteelements 19 in seiner Längserstreckung relativ zur der Basisschiene 4 zuzulassen.

**Figur 4** zeigt eine Längsschnittdarstellung des Montagesystems 1 aus den vorhergehenden Figuren. Die Befestigungsschraube 31, beziehungsweise die in der in dem Halteelement 19 ausgebildete Schraubenöffnung für die Befestigungsschraube 31, ist zwischen dem Abstandshalter 28 und dem Solarmodulträger 9 angeordnet. Der Halteschenkel 10 des Solarmodulträgers 9 weist an seinem freien Ende einen ersten Vorsprung 36 und in Längserstreckung des Halteschenkels 10 gesehen den Vorsprung 20 auf, der hierbei einen zweiten Vorsprung bildet. Der zweite Vorsprung ist direkt an dem freien Ende des Halteschenkels 10 angeordnet und der Vorsprung 36 beabstandet dazu, sodass zwischen den beiden Vorsprüngen 36 und 20 eine Vertiefung 37 gebildet ist. Der Vorsprung 20 weist außerdem an dem freien Ende eine Auflaufschräge 38 auf, durch welche der Vorsprung 20 zu dem freien Ende hin spitzwinklig beziehungsweise keilförmig ausgebildet ist.

Wird bei der Montage der Solarmodulträger 9 mit dem Halteschenkel 10 an seinem freien Ende mit der Auflaufschräge 38 unter das gegebenenfalls bereits vormontierte Halteelement 19 geschoben, so wird dieses an dem Randabschnitt 22 durch den Vorsprung 20 und der Auflaufschräge 38 angehoben, sodass der Solarmodulträger 9 einfach unter das Halteelement 19 geschoben werden kann, bis der Vorsprung 20 in die Öffnung 21 vollständig gelangt und der Randabschnitt 22 des Halteelements 19 wieder in Richtung der Basisschiene 4 bewegbar ist beziehungsweise herunter fällt. Der Bereich 39 zwischen der Öffnung 21 und dem freien Ende des Halteelements 19 ist dabei in Längserstreckung gesehen kürzer ausgebildet als die Vertiefung 37, sodass das Halteelement 19 mit dem Endabschnitt 39 in die Vertiefung 37 fällt beziehungsweise eingreift, wenn der Vorsprung 20 in die Öffnung 21 verbracht wird.

Wie in **Figur 4** gezeigt, ist die Vertiefung 37 in Längserstreckung gesehen länger ausgebildet als der Endabschnitt 39, und der Vorsprung 20 ist in Längserstreckung gesehen kürzer ausgebildet als die Öffnung 21, sodass der Solarmodulträger 9 mit dem Halteschenkel 10 in Längserstreckung gesehen relativ zu dem Halteelement 19 verschiebbar und formschlüssig durch das Halteelement 19 in seiner Verschiebbarkeit begrenzt ist. Insbesondere ist der Solarmodulträger 9 durch die vorteilhafte Verbindung zwischen Halteelement 19 und Halteschenkel 10 formschlüssig verliersicher an dem Halteelement 19 gehalten. Sobald die Befestigungsschraube 31 angezogen und das Halteelement 19 in Richtung der Basisschiene 4 mit einer Klemmkraft beaufschlagt wird, ist ein ungewolltes Lösen des Solarmodulträgers 9 von dem Halteelement 19 nicht mehr möglich, da es zwischen Halteelement 19 und Basisschiene 4 gehalten ist.

Der Abstandshalter 28 begrenzt dabei die durch das Halteelement 19 auf den Halteschenkel 10 übertragbare Klemmkraft der Befestigungsschraube 31. Optional ist der Abstandshalter 28 derart ausgebildet, dass durch die Befestigungsschraube 31 keine Klemmkraft auf den Halteschenkel 10 ausgeübt werden kann, die Klemmkraft also im Bereich des Halteschenkels 10 aufgehoben wird. Zumindest aber wird die Klemmkraft im Bereich des Halteschenkels 10 reduziert, sodass die zwischen dem Endabschnitt 39 beziehungsweise dem Randabschnitt 22 und dem Halteschenkel 10 wirkende Reibkraft derart gering ist, dass ein Verschieben des Solarmodulträgers 9 relativ zu dem Halteelement 19 trotz der durch die Befestigungsschraube 31 aufgebrachten Klemmkraft gewährleistet ist. Hierdurch ist sichergestellt, dass trotz einer Befestigungskraft und sicheren Befestigung des Solarmodulträgers 9 ein Längenausgleich beziehungsweise Verlagern von Solarmodulträger 9 zu Halteelement 19 zur Kompensation von temperaturbedingten Längenänderungen stets möglich ist. Dabei ist die Bewegbarkeit, wie vorstehend bereits erwähnt, sowohl in Längserstreckung als auch quer zur Längserstreckung der Basisschiene 4 gewährleistet.

In vorteilhafter Weise weist das Montagesystem 2 eine Vielzahl von Halteelementen 19, Solarmodulträgern 9 und Basisschienen 4 auf, die wie vorstehend beschrieben ausgebildet sind, um die oben beschriebene mechanische Verbindung zwischen Haltelement, Solarmodulträger und Basisschiene eingehen zu können.

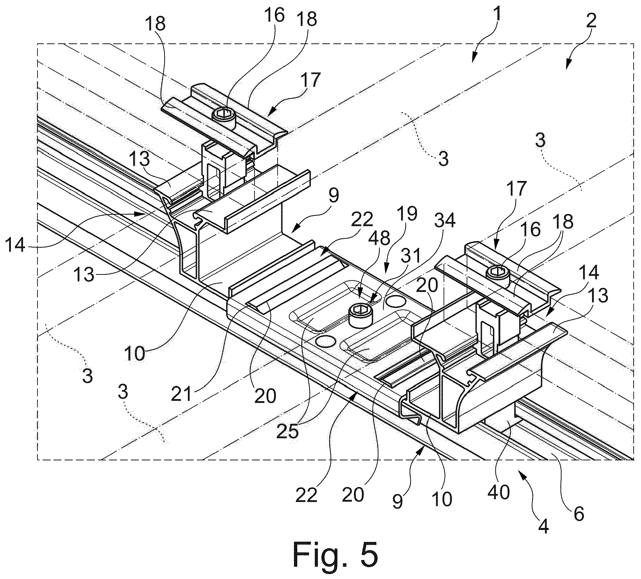

Während in dem ersten Ausführungsbeispiel das Halteelement 19 dazu ausgebildet, lediglich einen Solarmodulträger 9 zu halten, ist gemäß einem in **Figur 5** dargestellten zweiten Ausführungsbeispiel vorgesehen, dass das Montagesystem 2 zusätzlich oder alternativ eine Variante des Halteelements 19 umfasst, die dazu dient, zwei Solarmodulträger 9 auf der Basisschiene 4 zu befestigen. Wie in **Figur 5** gezeigt, ist dazu das Halteelement 19 in Längserstreckung gesehen gespiegelt ausgebildet, sodass es an seinen beiden stirnseitigen Randabschnitten 22 jeweils eine Öffnung 21 zur Aufnahme jeweils eines Vorsprungs 20 des jeweiligen Solarmodulträgers 9 aufweist. Dabei liegt die Spiegelachse auf Höhe der Befestigungsschraube 31, sodass das Halteelement 19 durch die eine Befestigungsschraube 31 auf der Basisschiene 4 unter Arretierung der Solarmodulträger 9 verschiebbar ist. Dadurch sind beide Solarmodulträger 9 relativ zu dem Halteelement 19 auf der Basisschiene 4 verschiebbar und formschlüssig an dem Halteelement 19 gehalten. Optional weisen die Solarmodulträger 9 jeweils einen in Richtung der Basisschiene 4 vorstehenden nutsteinförmigen Haltevorsprung 40 auf, der in der Basisschiene 4 verschiebbar gelagert ist. Dazu ist der Haltevorsprung 40 in seiner Kontur wie der Nutstein 29 ausgebildet, um verliersicher in der Basisschiene 4 verschiebbar zu sein.

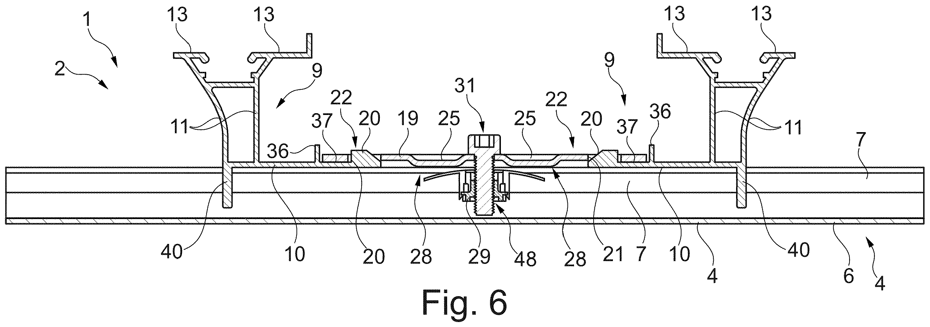

**Figur 6** zeigt eine Längsschnittdarstellung des zweiten Ausführungsbeispiels. Dabei ist gut zu erkennen, dass die Vorsprünge 20 beider Solarmodulträger 9 in die jeweils zugeordnete Öffnung 20 im Randabschnitt 22 des Halteelements 19 eingreifen. In diesem Ausführungsbeispiel ist in vorteilhafter Weise auch der Abstandhalter 28 derart ausgebildet, dass er beidseits der Befestigungsschraube 31 ebenfalls spiegelbildlich ausgebildet ist, sodass eine gleichmäßige und symmetrische Abstützung des Halteelements 19 auf der Oberseite der Längsseiten 7 der Basisschiene 4 sicher gewährleistet ist.

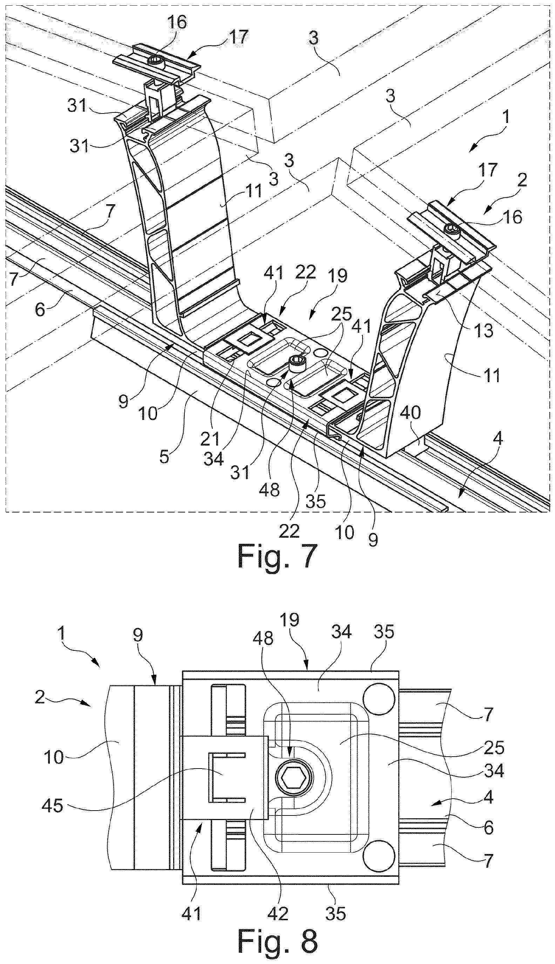

**Figur 7** zeigt in einer perspektivischen Darstellung ein drittes Ausführungsbeispiel der Montageanordnung 1 beziehungsweise des Montagesystems 2. In vorteilhafter Weise umfasst das Montagesystem 2 die Einzelteile der hier vorgestellten Ausführungsbeispiele, um je nach Bedarf eine Montageanordnung 1 gemäß einem der vorliegend beschriebenen Ausführungsbeispiele herzustellen. Das dritte Ausführungsbeispiel unterscheidet sich in der Art der Verbindung zwischen Halteelement 19 und Solarmodulträgern sowie in der Form der Solarmodulträger 9, wobei die beiden Unterschiede unabhängig voneinander realisierbar und insoweit auch mit den vorstehenden Ausführungsbeispielen unabhängig voneinander kombinierbar sind.

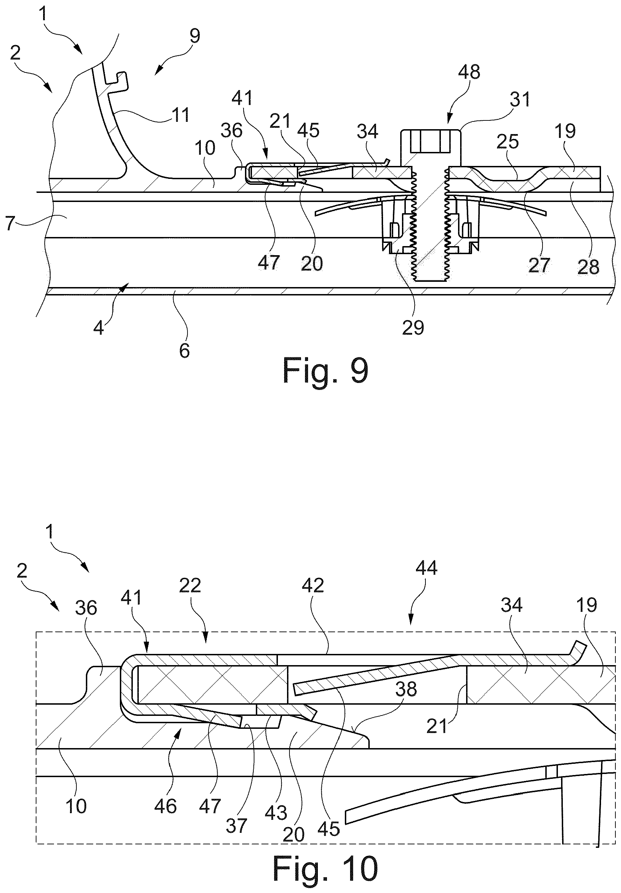

Die Solarmodulträger 9 sind zwar auch gemäß diesem Ausführungsbeispiel L-förmig ausgebildet, im Unterschied zu dem vorhergehenden Ausführungsbeispielen ist jedoch der nach oben vorstehende Tragschenkel 11 mit einer Krümmung versehen, sodass die Auflagen 13 der Tragschenkel 10 nicht in einer gemeinsamen Ebene liegen, wie im Ausführungsbeispiel von Figur 5 gezeigt, sondern geneigt zueinander ausgerichtet sind, sodass die darauf abgelegten Solarmodule 3 an zueinander geneigten Ebenen liegen. Gemäß dem Ausführungsbeispiel von **Figur 7** ist das Halteelement 19 dazu ausgebildet, wie in Figur 5 und 6 zwei Solarmodulträger 9 gleichzeitig auf der Basisschiene 4 zu arretieren. Gemäß einem weiteren Ausführungsbeispiel, wie in **Figur 8** gezeigt, ist das Halteelement 19 dazu ausgebildet, nur einen Solarmodulträger 9 auf der Basisschiene 4 zu halten, entsprechend dem Ausführungsbeispiel von Figur 1. Im Unterschied dazu sieht jedoch die Ausbildung in Figuren 6 und 7 vor, dass der jeweilige Solarmodulträger 9 nicht mit einem Vorsprung 20 in die Öffnung 21 des Halteelements 19 eingreift, sondern, dass zwischen Solarmodulträger 9 und Halteelement 19 jeweils eine Halteklammer 41 angeordnet ist. **Figur 9** zeigt dazu das Ausführungsbeispiel von **Figur 8** in einer Längsschnittdarstellung.

**Figur 10** zeigt eine vergrößerte Detailansicht der Längsschnittdarstellung zum besseren Verständnis. Die Halteklammer 41 ist auf den Randabschnitt 22 des Halteelements 19 aufgeschoben. Dazu ist die Halteklammer 41 im Wesentlichen U-förmig gebogen mit einem auf der Oberseite des Halteelements 19 aufliegenden Oberschenkel 42 und einem auf der Unterseite anliegenden Unterschenkel 43. Der Oberschenkel 42 weist einen Rastabschnitt 44 auf, in welchem mittig (in Quererstreckung gesehen) eine Rastzunge 45 in Richtung des Unterschenkel 43 herausgebogen ist. Dabei ist die Biegestelle an dem vorderen beziehungsweise dem freien Ende des Oberschenkels 42 zugewandten Ende der Rastzunge 45 ausgebildet, sodass die Rastzunge 45 in Richtung des Unterschenkels 43 und des geschlossenen Endes der Halteklammer 41 mit ihrem freien Ende vorsteht. Dabei ist die Rastzunge 45 derart ausgebildet, dass beim Aufschieben der Halteklammer 41 auf den Randabschnitt 22 die Rastzunge 45 unter elastischer Verformung zunächst zurückgebogen wird und aufgrund ihrer Eigenelastizität dann in die Öffnung 21 des Halteelements 19 vorspringt beziehungsweise einrastet. Dabei ist ein Zurückziehen der Halteklammer 41 entgegen der Montagerichtung formschlüssig verhindert.

Der Unterschenkel 43 weist einen Lagerabschnitt 46 mit einer herausgebogenen Haltelasche 47 auf. Auch die Haltelasche ist bevorzugt mittig in der Halteklammer 41 ausgebildet, in einer Draufsicht beziehungsweise in Quererstreckung gesehen, wie beispielsweise in **Figur 8** gezeigt, wobei die Biegestelle an dem geschlossenen Ende der Halteklammer 41 zugewandten Ende der Haltelasche 47 angeordnet ist, sodass das freie Ende der Haltelasche 47 im Bereich des freien Endes des Halteschenkels 10 von dem Oberschenkel 42 wegweisend vorsteht. Der Vorsprung 20 des Halteschenkels 10 ist in diesem Fall deutlich kleiner als der Vorsprung 36 ausgebildet, sodass der Vorsprung 20 vollständig unterhalb des Halteelements 19 beziehungsweise des Randabschnitts des Halteelements 19 anordenbar ist, wie in **Figuren 9 und 10** gezeigt. Dennoch steht der Vorsprung 20 derart weit vom Halteschenkel 10 vor, dass zwischen Vorsprung 36 und 20 die Vertiefung 37 ausgebildet ist. In diese Vertiefung 37 ragt nunmehr die Haltelasche 47 ein. Sobald der Halteschenkel 10 mithilfe der Auflaufschräge 38 unter das Halteelement 19 geschoben ist, verrastet die Haltelasche 47 in der Vertiefung 37, wodurch ein Zurückziehen des Halteschenkels 10 entgegen der Montagerichtung formschlüssig durch die Halteklammer 41 verhindert ist. Der Lagerabschnitt 46 des Unterschenkels 43 liegt ansonsten auf dem Halteschenkel 10 und insbesondere auch auf dem Vorsprung 20 auf, wie in **Figur 10** gezeigt. Durch die vorteilhafte Halteklammer 41 ist somit ebenfalls eine einfache Montage gewährleistet, wobei dadurch, dass die Haltelasche 47 kürzer ausgebildet ist als die Vertiefung 37, auch weiterhin ein Spiel zwischen Halteschenkel 10 und Halteelement 19 gewährleistet ist, das einen temperaturbedingten Längenausgleich ermöglicht.

Wie in Figur 8 und auch in Figur 7 gezeigt, ist die Halteklammer 41 schmaler ausgebildet als der Halteschenkel 10 und das Halteelement 19, sodass sich insbesondere auch quer zur Basisschiene 4 eine Verschiebbarkeit beziehungsweise eine spielbehaftete Verbindung von Halteelement 19 und Halteschenkel 10 ergibt, durch welche temperaturbedingte Längenänderungen vorteilhaft ausgeglichen werden können, ohne dass kritische Spannungen in der Montageanordnung 1 entstehen.

Selbstverständlich kann das Halteelement 19 auch durch mehr als nur eine Befestigungsschraube 16 an der Basisschiene 4 mithilfe eines oder jeweils eines Nutsteins befestigt werden. Auch können mehrere Vorsprünge 27 zur Ausbildung von Abstandshaltern 28 an dem Halteelement ausgebildet sein. Darüber hinaus kann der jeweilige Abstandshalter 28 auch als Anbauteil oder die Dicke des Halteelements vergrößernder Vorsprung, anstelle einer sickenförmigen Ausbildung, ausgebildet sein.

## Patentansprüche

1. Montagesystem (2) für plattenförmige Solarmodule (3), mit einer auf einem Dach eines Gebäudes anordenbaren Basisschiene (4), mit zumindest einem L-förmigen Solarmodulträger (9), der einen der Basisschiene (4) zugeordneten Halteschenkel (10) und einen zumindest im Wesentlichen senkrecht dazu ausgerichteten Trageschenkel (11) aufweist, wobei der Tragschenkel (11) eine Auflage für zumindest ein Solarmodul (3) aufweist und der Halteschenkel (10) zur zumindest bereichsweisen Auflage auf der Basisschiene (4) ausgebildet ist, und mit einem Halteelement (19) zum Befestigen des Halteschenkels (10) auf der Basisschiene (4), und mit einem in der Basisschiene (4) verschiebbaren Nutstein (29), der durch eine Schraubverbindung (48) mit dem Haltelement (19) zum Befestigung des Halteschenkels (10) auf der Basisschiene (4) verbunden oder verbindbar ist, **dadurch gekennzeichnet, dass** das Haltelement (19) in einem Basisabschnitt (34) einen auf den Halteschenkel (10) auflegbaren und formschlüssig mit dem Halteschenkel (10) verbindbaren Randabschnitt (22) und beabstandet zu dem Randabschnitt (22) zumindest einen von einer der Unterseite (26) des Basisabschnitts vorstehenden Abstandshalter (28) zur Auflage auf der Basisschiene (4) aufweist, der eine durch die Schraubverbindung (48) erzeugbare und auf den Halteschenkel (10) wirkende Klemmkraft zumindest reduziert.

2. Montagesystem nach Anspruch 1, **dadurch gekennzeichnet, dass** das Halteelement (19) den Basisabschnitt (34) und zwei von der der Basisschiene (4) zugeordneten Unterseite (26) des Basisabschnitts (34) vorstehende Stützabschnitte (35) aufweist, und dass die Stützabschnitte (35) zur verdrehsicheren Aufnahme der Basisschiene (4) zwischen sich ausgebildet sind.

3. Montagesystem nach einem der vorhergehenden Ansprüche, **dadurch gekennzeichnet, dass** der Halteschenkel (10) an seinem freien Ende auf der dem Tragschenkel (11) zugewandten Oberseite eine Vertiefung (37) für die formschlüssige Verbindung mit dem Halteelement (19) aufweist.

4. Montagesystem nach Anspruch 3, **dadurch gekennzeichnet, dass** an dem Halteelement (19) eine Halteklammer (41) zur Lagerung an dem Halteschenkel (10) befestigt ist.

5. Montagesystem nach Anspruch 4, **dadurch gekennzeichnet, dass** die Halteklammer (41) im Längsschnitt zumindest im Wesentlichen U-förmig gebogen und auf den Randabschnitt (22) des Halteelements (19) zur Befestigung an dem Halteelement (19) aufgeschoben ist.

6. Montagesystem nach einem der Ansprüche 4 oder 5, **dadurch gekennzeichnet, dass** die Halteklammer (41) einen Unterschenkel (43) und einen Oberschenkel (42) aufweist, zwischen denen der Randabschnitt (22) des Halteelements (19) aufnehmbar oder aufgenommen ist, und dass der Unterschenkel (43) dazu ausgebildet ist, in der Vertiefung (37) des Halteschenkels (10) verschiebbar zu lagern.

7. Montagesystem nach Anspruch 6, **dadurch gekennzeichnet, dass** der Unterschenkel (43) einen Lagerabschnitt (46) mit einer herausgebogenen Haltelasche (47) aufweist, die sich in der Vertiefung (37) längserstreckt.

8. Montagesystem nach Anspruch 7, **dadurch gekennzeichnet, dass** der Lagerabschnitt (46) dazu ausgebildet ist, sich über die Vertiefung (37) hinweg zu erstrecken und auf dem Halteschenkel (10) aufzuliegen.

9. Montagesystem nach einem der Ansprüche 3 bis 8, **dadurch gekennzeichnet, dass** der Halteschenkel (10) beabstandet zu seinem freien Ende einen die Vertiefung (37) begrenzenden ersten Vorsprung (36) aufweist, der einen Axialanschlag für den Randabschnitt (22) des Halteelements (19) bildet.

10. Montagesystem nach Anspruch 9, **dadurch gekennzeichnet, dass** der Halteschenkel (10) an seinem freien Ende einen die Vertiefung (37) begrenzenden zweiten Vorsprung (20) aufweist, der weniger weit vorsteht als der erste Vorsprung (36).

11. Montagesystem nach Anspruch 10, **dadurch gekennzeichnet, dass** der zweite Vorsprung (20) durch eine an dem zweiten Ende ausgebildete Auflaufschräge (38) für das Halteelement (19) ausgebildet ist.

12. Montagesystem nach Anspruch 6, **dadurch gekennzeichnet, dass** das Halteelement (19) in dem Randabschnitt (22) eine weitere Vertiefung oder Öffnung (21) aufweist, wobei die Halteklammer (41) in dem Oberschenkel (42) einen Rastabschnitt (44) zum Verrasten der Halteklammer (41) in der weiteren Vertiefung oder Öffnung (21) des Halteelements (19) aufweist.

13. Montagesystem nach Anspruch 12, **dadurch gekennzeichnet, dass** der Rastabschnitt (44) eine herausgebogene Rastzunge (45) aufweist, die in Richtung des Unterschenkels (43) vorsteht, um in die weitere Vertiefung oder Öffnung (21) beim Aufschieben auf das Halteelement (19) einzugreifen.

14. Montagesystem nach Anspruch 13, **dadurch gekennzeichnet, dass** die Rastzunge (45) an ihrem in Aufschieberichtung vorne liegenden Ende mit dem Oberschenkel (42) einstückig verbunden und mit dem von dem vorne liegenden Ende abgewandten hinteren Ende in Richtung des Unterschenkels (43) herausgebogen ist.

15. Montagesystem nach Anspruch 10, **dadurch gekennzeichnet, dass** das Halteelement (19) in dem Randabschnitt eine Öffnung (21) aufweist, und dass der zweite Vorsprung (20) dazu ausgebildet ist, in die Öffnung (21) zur Arretierung des Halteschenkels (10) an dem Halteelement (19) einzugreifen.

16. Montagesystem nach Anspruch 15, **dadurch gekennzeichnet, dass** der zweite Vorsprung (20) zur spielbehafteten Verbindung in Längserstreckung des Halteelements (19) kürzer ausgebildet ist als die Öffnung (21) in Längserstreckung des Halteelements (19).

17. Montagesystem nach Anspruch 16, **dadurch gekennzeichnet, dass** der zweite Vorsprung (20) zur spielbehafteten Verbindung in Quererstreckung des Halteelements (19) schmaler ausgebildet ist als die Öffnung (21) in Quererstreckung des Halteelements (19).

18. Montagesystem nach einem der vorhergehenden Ansprüche, **dadurch gekennzeichnet, dass** der Abstandshalter (28) stegförmig ausgebildet ist und sich quer zu der Basisschiene (4) erstreckt, um auf beiden Längsseiten der Basisschiene (4) aufzuliegen, oder dass an der Unterseite des Basisabschnitts (34) zwei, insbesondere sich stegförmig und längserstreckende Abstandshalter (28) ausgebildet sind, um auf jeweils einer der Längsseiten (7) der Basisschiene (4) aufzuliegen.

19. Montagesystem nach einem der vorhergehenden Ansprüche, **dadurch gekennzeichnet, dass** der Tragschenkel (11) an seinem freien Ende eine Nutprofilschiene (14) zur Aufnahme eine Nutsteins (15) aufweist, und dass das Montagesystem (2) wenigstens einen in die Nutprofilschiene (14) einschiebbaren Nutstein (15) sowie einen Solarmodulniederhalter (17) aufweist, wobei der Nutstein (15) und der Solarmodulniederhalter (17) durch eine Schaubverbindung miteinander verbunden oder verbindbar sind.

20. Montagesystem nach einem der vorhergehenden Ansprüche, **dadurch gekennzeichnet, dass** das Halteelement (19) in Längserstreckung zur Befestigung von zwei Solarmodulträgern (9) gespiegelt ausgebildet ist.

21. Montageanordnung (1) für ein oder mehrere Solarmodule (3), gebildet aus einem Montagesystem nach einem der Ansprüche 1 bis 20, mit einer Basisschiene (4) und mit zumindest einem L-förmigen Solarmodulträger (9), der einen der Basisschiene (4) zugeordneten Halteschenkel (10) und einen zumindest im Wesentlichen senkrecht dazu ausgerichteten Trageschenkel aufweist, wobei der Tragschenkel (11) eine Auflage für zumindest ein Solarmodul (3) aufweist und der Halteschenkel (10) auf der Basisschiene (4) zumindest bereichsweise aufliegt, mit einem Halteelement (19) zum Befestigen des Halteschenkels (11) auf der Basisschiene (4), und mit einem in der Basisschiene (4) verschiebbaren Nutstein (29), der durch eine Schraubverbindung (48) mit dem Haltelement (19) zum Befestigung des Halteschenkels (10) auf der Basisschiene (4) verbunden ist, **dadurch gekennzeichnet, dass** das Haltelement (19) in dem Basisabschnitt (34) einen auf den Halteschenkel (10) aufgelegten und formschlüssig mit dem Halteschenkel (10) verbundenen Randabschnitt (22) und beabstandet zu dem Randabschnitt (22) zumindest einen von der Unterseite (26) vorstehenden Abstandshalter (28) zur Auflage auf der Basisschiene (4) aufweist, der eine durch die Schraubverbindung (48) erzeugte und auf den Halteschenkel (10) wirkende Klemmkraft zumindest reduziert.

22. Montageanordnung nach Anspruch 21, **dadurch gekennzeichnet, dass** auf einen Randabschnitt (22) des Halteelements (19) eine Halteklammer (41) zur Arretierung des Solarmodulträgers (9) auf der Basisschiene (4) aufgeschoben ist.

23. Montageanordnung nach Anspruch 21, **dadurch gekennzeichnet, dass** der Halteschenkel (10) des Solarmodulträgers (9) einen Vorsprung (20) aufweist, der in eine Öffnung (21) im Randabschnitt (22) des Halteelements (19) eingreift.

24. Montageanordnung nach Anspruch 22, **dadurch gekennzeichnet, dass** auf der Basisschiene (4) zwei Solarmodulträger (9) in Längserstreckung der Basisschiene (4) beabstandet zueinander angeordnet sind, und dass das Halteelement auf den Halteschenkeln (10) beider Solarmodulträger (9) aufliegt.

25. Solaranlage für ein oder auf einem Dach eines Gebäudes, mit wenigstens einem insbesondere plattenförmigen Solarmodul (3) und mit einer Montageanordnung (1), durch welche das wenigstens eine Solarmodul (3) auf dem Dach anordenbar oder angeordnet ist, **dadurch gekennzeichnet, dass** die Montageanordnung (1) gemäß einem der Ansprüche 21 bis 24 ausgebildet ist.

## Claims

1. Mounting system (2) for plate-shaped solar modules (3), comprising at least one base rail (4), which can be arranged on a roof of a building, comprising at least one L-shaped solar module carrier (9), which has a retaining leg (10) assigned to the base rail (4), and a carrying leg (11), which is aligned at least essentially perpendicularly thereto, wherein the carrying leg (11) has a support for at least one solar module (3), and the retaining leg (10) is formed to rest on the base rail (4) at least in some regions, and comprising a retaining element (19) for fastening the retaining leg (10) to the base rail (4), and comprising a sliding block (29), which can be moved in the base rail (4) and which is connected or can be connected to the retaining element (19) by means of a screw connection (48) for fastening the retaining leg (10) to the base rail (4), **characterized in that** in a base portion (34), the retaining element (19) has an edge portion (22), which can be rested on the retaining leg (10) and which can be connected in a positive manner to the retaining leg (10), and, spaced apart from the edge portion (22), at least one spacer (28), which protrudes from the underside (26) of the base portion, for resting on the base rail (4), which spacer at least reduces a clamping force, which can be generated by means of the screw connection (48) and which acts on the retaining leg (10).

2. Mounting system according to claim 1, **characterized in that** the retaining element (19) has the base portion (34) and two bracing portions (35), which protrude from the underside (26) of the base portion (34), which is assigned to the base rail (4), and that the bracing portions (35) are formed for receiving the base rail (4) between them in a rotationally fixed manner.

3. Mounting system according to any one of the preceding claims, **characterized in that** the retaining leg (10) has, on its free end on the top side facing the carrying leg (11), a depression (37) for the positive connection with the retaining element (19).

4. Mounting system according to claim 3, **characterized in that** a retaining clamp (41) for storage on the retaining leg (10) is fastened to the retaining element (19).

5. Mounting system according to claim 4, **characterized in that** in the longitudinal section, the retaining clamp (41) is bent at least essentially in a U-shaped manner, and is pushed onto the edge portion (22) of the retaining element (19) for fastening to the retaining element (19).

6. Mounting system according claims 4 or 5, **characterized in that** the retaining clamp (41) has a lower leg (43) and an upper leg (42), between which the edge portion (22) of the retaining element (19) can be received or is received, and that the lower leg (43) is formed to be movably stored in the depression (37) of the retaining leg (10).

7. Mounting system according to claim 6, **characterized in that** the lower leg (43) has a storage portion (46) comprising a bent-out retaining tab (47), which extends longitudinally in the depression (37).

8. Mounting system according to claim 7, **characterized in that** the storage portion (46) is formed to extend beyond the depression (37) and to rest on the retaining leg (10).

9. Mounting system according to any one of claims 3 to 8, **characterized in that** the retaining leg (10), spaced apart from its free end, has a first protrusion (36), which limits the depression (37) and which forms an axial stop for the edge portion (22) of the retaining element (19).

10. Mounting system according to claim 9, **characterized in that** on its free end, the retaining leg (10) has a second protrusion (20), which limits the depression (37) and which protrudes less far than the first protrusion (36).

11. Mounting system according to claim 10, **characterized in that** the second protrusion (20) is formed by a run-on slope (38) formed on the second end for the retaining element (19).

12. Mounting system according to claim 6, **characterized in that** the retaining element (19) has a further depression or opening (21) in the edge portion (22), wherein the retaining clamp (41) has a lock portion (44) in the upper leg (42) for locking the retaining clamp (41) in the further depression or opening (21) of the retaining element (19).

13. Mounting system according to claim 12, **characterized in that** the lock portion (44) has a bent-out locking lug (45), which protrudes in the direction of the lower leg (43) in order to engage with the further depression or opening (21) when being pushed onto the retaining element (19).

14. Mounting system according to claim 13, **characterized in that** on its end located in the front in the push-on direction, the locking lug (45) is connected in one piece with the upper leg (42), and is bent out with the rear end facing away from the end located in the front in the direction of the lower leg (43).

15. Mounting system according to claim 10, **characterized in that** the retaining element (19) has an opening (21) in the edge portion, and that the second protrusion (20) is formed to engage with the opening (21) for locking the retaining leg (10) on the retaining element (19).

16. Mounting system according to claim 15, **characterized in that** for the connection with play, the second protrusion (20) is formed to be shorter in the longitudinal extension of the retaining element (19) than the opening (21) in the longitudinal extension of the retaining element (19).

17. Mounting system according to claim 16, **characterized in that** for the connection with play, the second protrusion (20) is formed to be narrower in the transverse extension of the retaining element (19) than the opening (21) in the transverse extension of the retaining element (19).

18. Mounting system according to any one of the preceding claims, **characterized in that** the spacer (28) is formed in a web-shaped manner and extends transversely to the base rail (4), in order to rest on both longitudinal sides of the base rail (4), or that two spacers (28), which in particular extend in a web-shaped manner and longitudinally, are formed on the underside of the base portion (34), in order to rest in each case on one of the longitudinal sides (7) of the base rail (4).

19. Mounting system according to any one of the preceding claims, **characterized in that** on its free end, the carrying leg (11) has a groove profile rail (14) for receiving a sliding block (15), and that the mounting system (2) has at least one sliding block (15), which can be inserted into the groove profile rail (14), as well as a solar module holding down clamp (17), wherein the sliding block (15) and the solar module holding down clamp (17) are or can be connected to one another by means of a screw connection.

20. Mounting system according to any one of the preceding claims, **characterized in that** the retaining element (19) is formed in a mirrored manner in the longitudinal extension for fastening two solar module carriers (9).

21. Mounting arrangement (1) for one or several solar modules (3), formed from a mounting system according to any one of claims 1 to 20, comprising a base rail (4) and comprising at least one L-shaped solar module carrier (9), which has a retaining leg (10) assigned to the base rail (4) and a carrying leg, which is aligned at least essentially perpendicularly thereto, wherein the carrying leg (11) has a support for at least one solar module (3), and the retaining leg (10) rests on the base rail (4) at least in some regions, comprising a retaining element (19) for fastening the retaining leg (11) to the base rail (4), and comprising a sliding block (29), which can be moved in the base rail (4) and which is connected to the retaining element (19) by means of a screw connection (48) for fastening the retaining leg (10) to the base rail (4), **characterized in that** in the base portion (34), the retaining element (19) has an edge portion (22), which is rested on the retaining leg (10) and which is connected in a positive manner to the retaining leg (10), and, spaced apart from the edge portion (22), at least one spacer (28), which protrudes from the underside (26) for resting on the base rail (4) and which at least reduces a clamping force, which is generated by the screw connection (48) and which acts on the retaining leg (10).

22. Mounting arrangement according to claim 21, **characterized in that** a retaining clamp (41) for locking the solar module carrier (9) on the base rail (4) is pushed onto an edge portion (22) of the retaining element (19).

23. Mounting arrangement according to claim 21, **characterized in that** the retaining leg (10) of the solar module carrier (9) has a protrusion (20), which engages with an opening (21) in the edge portion (22) of the retaining element (19).

24. Mounting arrangement according to claim 22, **characterized in that** two solar module carriers (9) are arranged on the base rail (4) spaced apart from one another in the longitudinal extension of the base rail (4), and that the retaining element rests on the retaining legs (10) of both solar module carriers (9).

25. Solar system for a or on a roof of a building, comprising at least one in particular plate-shaped solar module (3) and comprising a mounting arrangement (1), by means of which the at least one solar module (3) can be arranged or is arranged on the roof, **characterized in that** the mounting arrangement (1) is formed according to any one of claims 21 to 24.

## Revendications

1. Système de montage (2) pour des modules solaires plans (3), comprenant un rail de base (4) pouvant être agencé sur le toit d'un bâtiment, comprenant au moins un support de module solaire en forme de L (9) qui présente une branche de retenue (10) associée au rail de base (4) et une branche porteuse (11) orientée de manière au moins essentiellement perpendiculaire à ladite branche de retenue, dans lequel la branche porteuse (11) présente un appui pour au moins un module solaire (3) et la branche de retenue (10) est conçue afin de s'appuyer, au moins par endroits, sur le rail de base (4), et comprenant un élément de retenue (19) permettant de fixer la branche de retenue (10) sur le rail de base (4), et comprenant un bloc coulissant (29) qui peut être coulissé dans le rail de base (4) et qui est relié ou peut être relié à l'élément de retenue (19) grâce à une liaison par vissage (48) afin de fixer la branche de retenue (10) sur le rail de base (4), **caractérisé en ce que** l'élément de retenue (19) présente dans une section de base (34) une section de bord (22) pouvant être placée sur la branche de retenue (10) et pouvant être reliée avec un verrouillage par complémentarité de forme à la branche de retenue (10), et ledit élément de retenue présente, à distance de la section de bord (22), au moins une entretoise (28) faisant saillie à partir d'une face inférieure (26) de la section de base et permettant un appui sur le rail de base (4), ladite entretoise réduisant au moins la force de serrage pouvant être générée par la liaison par vissage (48) et agissant sur la branche de retenue (10).

2. Système de montage selon la revendication 1, **caractérisé en ce que** l'élément de retenue (19) présente la section de base (34) et deux sections d'appui (35) faisant saillie par rapport à la face inférieure (26), associée au rail de base (4), de la section de base (34) et **en ce que** les sections d'appui (35) sont conçues afin d'accueillir entre elles le rail de base (4) d'une manière qui empêche une rotation.

3. Système de montage selon l'une quelconque des revendications précédentes, **caractérisé en ce que** la branche de retenue (10) présente à son extrémité libre, sur la face supérieure tournée vers la branche porteuse (11), un renfoncement (37) destinée à la liaison avec verrouillage par complémentarité de forme avec l'élément de retenue (19).

4. Système de montage selon la revendication 3, **caractérisé en ce qu'**une pince de retenue (41) est fixée à l'élément de retenue (19) en vue du montage sur la branche de retenue (10).

5. Système de montage selon la revendication 4, **caractérisé en ce que** la pince de retenue (41) est pliée au moins de manière essentiellement en forme de U en coupe longitudinale et est enfilée sur la section de bord (22) de l'élément de retenue (19) en vue de la fixation sur l'élément de retenue (19).

6. Système de montage selon l'une quelconque des revendications 4 ou 5, **caractérisé en ce que** la pince de retenue (41) présente une branche inférieure (43) et une branche supérieure (42) entre lesquelles la section de bord (22) de l'élément de retenue (19) peut être accueillie ou est accueillie, et **en ce que** la branche inférieure (43) est conçue afin d'être logée de manière coulissante dans le renfoncement (37) de la branche de retenue (10).

7. Système de montage selon la revendication 6, **caractérisé en ce que** la branche inférieure (43) présente une section de palier (46) comprenant une patte de retenue (47) courbée vers l'extérieur et qui s'étend de manière longitudinale dans le renfoncement (37).

8. Système de montage selon la revendication 7, **caractérisé en ce que** la section de palier (46) est conçue afin de s'étendre au-dessus du renfoncement (37) et de s'appuyer sur la branche de retenue (10).

9. Système de montage selon l'une quelconque des revendications 3 à 8, **caractérisé en ce que** la branche de retenue (10) présente, à distance de son extrémité libre, une première saillie (36) délimitant le renfoncement (37) et formant une butée axiale pour la section de bord (22) de l'élément de retenue (19).

10. Système de montage selon la revendication 9, **caractérisé en ce que** la branche de retenue (10) présente, au niveau de son extrémité libre, une deuxième saillie (20) délimitant le renfoncement (37) et faisant saillie moins loin que la première saillie (36).

11. Système de montage selon la revendication 10, **caractérisé en ce que** la deuxième saillie (20) est formée grâce à un chanfrein d'entrée (38) formé au niveau de la deuxième extrémité et destiné à l'élément de retenue (19).

12. Système de montage selon la revendication 6, **caractérisé en ce que** l'élément de retenue (19) présente un évidement ou orifice (21) supplémentaire dans la section de bord (22), dans lequel la pince de retenue (41) présente au sein de la branche supérieure (42) une section d'encliquetage (44) permettant d'encliqueter la pince de retenue (41) dans l'évidement ou orifice (21) supplémentaire de l'élément de retenue (19).

13. Système de montage selon la revendication 12, **caractérisé en ce que** la section d'encliquetage (44) présente une languette d'encliquetage (45) repliée vers l'extérieur qui fait saillie dans la direction de la branche inférieure (43) afin de venir en prise dans le renfoncement ou l'orifice (21) supplémentaire lors de l'enfilage sur l'élément de retenue (19).

14. Système de montage selon la revendication 13, **caractérisé en ce que** la languette d'encliquetage (45) est reliée d'un seul tenant à la branche supérieure (42) au niveau de son extrémité située à l'avant dans la direction d'enfilage et est repliée vers l'extérieur en direction de la branche inférieure (43) à l'extrémité arrière opposée à l'extrémité située à l'avant.

15. Système de montage selon la revendication 10, **caractérisé en ce que** l'élément de retenue (19) présente un orifice (21) dans la section de bord et **en ce que** la deuxième saillie (20) est conçue afin de venir en prise dans l'orifice (21) afin de bloquer la branche de retenue (10) sur l'élément de retenue (19).

16. Système de montage selon la revendication 15, **caractérisé en ce que** la deuxième saillie (20) est plus courte que l'orifice (21) dans la direction longitudinale de l'élément de retenue (19) afin de permettre une liaison avec jeu dans la direction longitudinale de l'élément de retenue (19).

17. Système de montage selon la revendication 16, **caractérisé en ce que** la deuxième saillie (20) est plus étroite que l'orifice (21) dans l'extension transversale de l'élément de retenue (19) afin de permettre une liaison avec jeu dans l'extension transversale de l'élément de retenue (19).

18. Système de montage selon l'une quelconque des revendications précédentes, **caractérisé en ce que** l'entretoise (28) est réalisée en forme de barrette et s'étend de manière transversale au rail de base (4) afin de s'appuyer sur les deux côtés longitudinaux du rail de base (4), ou **en ce que** deux entretoises (28), en particulier en forme de barrette et s'étendant de manière longitudinale, sont formées sur la face inférieure de la section de base (34) afin de s'appuyer sur respectivement un des côtés longitudinaux (7) du rail de base (4).

19. Système de montage selon l'une quelconque des revendications précédentes, **caractérisé en ce que** la branche porteuse (11) présente à son extrémité libre un rail profilé en rainure (14) permettant d'accueillir un bloc coulissant (15), et **en ce que** le système de montage (2) présente au moins un bloc coulissant (15) pouvant être inséré dans le rail profilé en rainure (14) ainsi qu'un support de module solaire (17), dans lequel le bloc coulissant (15) et le support de module solaire (17) sont reliés ou peuvent être reliés l'un à l'autre grâce à une liaison par vissage.

20. Système de montage selon l'une quelconque des revendications précédentes, **caractérisé en ce que** l'élément de retenue (19) est réalisé en miroir dans l'extension longitudinale afin de permettre la fixation de deux supports de modules solaires (9).

21. Agencement de montage (1) pour un ou plusieurs module(s) solaire(s) (3), constitué d'un système de montage selon l'une quelconque des revendications 1 à 20, comprenant un rail de base (4) et comprenant au moins un support de module solaire en forme de L (9) présentant une branche de retenue (10) associée au rail de base (4) et une branche porteuse orientée de manière au moins essentiellement perpendiculaire à ladite branche de retenue, dans lequel la branche porteuse (11) présente un appui pour au moins un module solaire (3) et la branche de retenue (10) s'appuie au moins par endroits sur le rail de base (4), avec un élément de retenue (19) permettant de fixer la branche de retenue (11) sur le rail de base (4), et avec un bloc coulissant (29) pouvant être coulissé dans le rail de base (4) et qui est relié à l'élément de retenue (19) grâce à une liaison par vissage (48) afin de fixer la branche de retenue (10) sur le rail de base (4), **caractérisé en ce que** l'élément de retenue (19) présente dans la section de base (34) une section de bord (22) placée sur la branche de retenue (10) et reliée avec verrouillage par complémentarité de forme à la branche de retenue (10) et ledit élément de retenue présente, à distance de la section de bord (22), au moins une entretoise (28) faisant saillie à partir d'une face inférieure (26) de la section de base et permettant un appui sur le rail de base (4), ladite entretoise réduisant au moins la force de serrage pouvant être générée par la liaison par vissage (48) et agissant sur la branche de retenue (10).

22. Agencement de montage selon la revendication 21, **caractérisé en ce qu'**une pince de retenue (41) est enfilée sur une section de bord (22) de l'élément de retenue (19) afin de bloquer le support de module solaire (9) sur le rail de base (4).

23. Agencement de montage selon la revendication 21, **caractérisé en ce que** la branche de retenue (10) du support de module solaire (9) présente une saillie (20) qui vient en prise dans un orifice (21) dans la section de bord (22) de l'élément de retenue (19).

24. Agencement de montage selon la revendication 22, **caractérisé en ce que** deux supports de modules solaires (9) sont agencés sur le rail de base (4) à distance l'un de l'autre dans l'étendue longitudinale du rail de base (4), et **en ce que** l'élément de retenue s'appuie sur les branches de retenue (10) des deux supports de modules solaires (9).

25. Installation solaire pour, ou sur, un toit d'un bâtiment, comprenant au moins un module solaire (3) en particulier en forme de plaque et comprenant un agencement de montage (1) grâce auquel le au moins un module solaire (3) peut être agencé ou est agencé sur le toit, **caractérisée en ce que** l'agencement de montage (1) est réalisé selon l'une quelconque des revendications 21 à 24.
